# EUROPÄISCHE PATENTANMELDUNG

(11) **EP 2 957 690 A1**
(43) Veröffentlichungstag der Anmeldung: **23.12.2015**
(21) Anmeldenummer: 15002203.6
(22) Anmeldetag: 18.09.2003
(51) Int. Cl.: E04F 15/02, E04F 15/04, B44C 5/04, A47B 96/20

(54) **MÖBELPLATTE**

(30) Priorität: 12.11.2002 DE 10252863
(62) Teilanmeldung aus: 03021069.4
(71) Anmelder: Kronotec AG, 6006 Luzern (CH)
(72) Erfinder: GRAFENAUER, Thomas, 4170 Haslach (AT)
(74) Vertreter: Rehmann, Thorsten

(57) **Zusammenfassung**

Die Erfindung betrifft eine Möbelplatte, die aus einer größeren Trägerplatte, bestehend aus MDF oder einer Spanplatte mit einer fein gestreuten Deckschicht, ausgesägt wurde, mit einem zumindest direkt auf die Oberseite aufgedruckten Dekor, vorzugsweise einem Holzdekor, das mit mindestens einer Schicht aus einem transparenten Kunstharz abgedeckt ist, in die ein zu dem Dekor korrespondierendes Relief gepresst ist.

Ferner betrifft die Erfindung ein Verfahren zur Herstellung einer Möbelplatte.

## Beschreibung

Die Erfindung betrifft eine Möbelplatte, die aus einer größeren Trägerplatte, bestehend aus MDF oder einer Spanplatte mit einer feingestreuten Deckschicht, ausgesägt wurde und ein Verfahren zur Herstellung einer solchen Möbelplatte.

Aus der WO 01/48333 A1 ist eine Holzfaserplatte bekannt. Das unmittelbar auf die Oberseite mittels eines Tintenstrahldruckers aufgedruckte Dekor wird von einer Verschleißschutzschicht abgedeckt, die aus einem UV-härtenden Acryllack besteht, der in einzelnen Schichten aufgetragen wird, wobei jede einzelne Schicht teilweise gehärtet wird, bevor die nächste Schicht aufgetragen wird.

Fußbodenpaneele mit einer Holzfaser-Trägerplatte werden üblicherweise als Laminatpaneele bezeichnet und sind seit vielen Jahren zur Substitution von Parkett im Handel. Das gewünschte Dekor (Parkett, Holzmaserung, Fliesen, usw.) wird vielfach auf eine Papierbahn aufgedruckt, die anschließend mit Harz beschichtet und auf eine Rolle aufgerollt wird. Die so vorgefertigte Dekorbahn wird bei dem Fußbodenhersteller auf die Trägerplatte aufgelegt und verpresst. Durch das Aufdrucken des Dekors auf die Papierbahn, das spätere Versiegeln der Papierbahn mit Kunstharz und das anschließende Verbinden der Dekorschicht mit der Trägerplatte durch Druck und Temperatur verändert sich die Papierbahn in ihren Abmessungen. Der Fachmann spricht davon, dass das Papier wächst. Das Papier wächst sowohl in der Länge (Längenwachstum) als auch in der Breite (Breitenwachstum). Wenn diese Dekorplatte nun zu einzelnen Paneelen zugeschnitten werden soll, müssen das Längen- und Breitenwachstum berücksichtigt werden, weil anderenfalls eine ungleiche Dekorverteilung auf den einzelnen Paneelen vorhanden wäre. Diese hätte zur Folge, dass der aus einer ungleich verteilten Dekorschicht zusammengesetzte Fußboden an den Verbindungskanten der Paneele Dekorsprünge aufweist. Selbst wenn solche Dekorsprünge nur wenige Millimeter betragen, fallen sie bei der Betrachtung auf, was den ästhetischen Eindruck negativ beeinflusst und damit die Qualität des ausgelegten Fußbodens mindert.

Um qualitätsgerecht produzieren zu können, muss das Papierwachstum erfasst und die Säge, die die Paneele aus der Trägerplatte zurecht sägt, entsprechend eingestellt werden. Eine manuelle Einstellung ist sehr zeitaufwendig. Die DE 100 19 054 C1 beschreibt ein Verfahren zum Zuschneiden von Paneelen aus einer Trägerplatte, mit dem die Säge automatisch an das Papierwachstum angepasst werden kann. Hierzu sind Kameras notwendig, die die Ist-Lage definierter Dekorpunkte ermitteln. Die Ist-Lage wird dann mit der Soll-Lage verglichen und die Abweichung des Breiten- oder Längenmaßes ermittelt, so dass die Säge entsprechend eingestellt werden kann.

Um den Zuschnitt zu optimieren muss also ein recht hoher Aufwand getrieben werden, der die Herstellung hochwertiger Paneele verteuert. Um die Optik des Laminatpaneels der Optik eines Naturholzpaneels weiter anzupassen kann in der Presse in der die Dekorschicht mit der Trägerplatte verpresst wird, eine ein Relief aufweisende Matrize vorgesehen sein, die ein der Holzmaserung entsprechendes Relief in die Kunstharzschicht prägt. Da das Papierwachstum nicht reproduzierbar ist, ist es nicht möglich, das Relief vollständig in Übereinstimmung mit dem Dekor zu bringen. Die Fugen eines Fliesenspiegels können, da hier Abweichungen sofort sichtbar wären, nicht in die Oberfläche geprägt werden.

Aus der DE 199 03 912 A1 ist ein Verfahren bekannt, bei dem die farbgebende Schicht, die es verhindert, dass das Material der Trägerplatte an der Oberseite durchscheint, nicht mehr auf die Dekorschicht aufgetragen, sondern direkt auf die Trägerschicht aufgebracht wird.

Die WO 02/45955 A2 offenbart eine Verschleißschutzschicht auf Basis von Kunstharz, in die Hartstoffpartikel mit einer Härte nach Mohs von mindestens 6 eingelagert sind und zusätzlich hierzu im Wesentlichen schneidkantenfreie, runde Feststoffpartikel mit einer Härte nach Mohs von mindestens 5 eingelagert sind, wobei die Korngrößenverteilung der runden Feststoffpartikel mindestens beim kleinsten Korndurchmesser der Hartstoffpartikel beginnt und maximal beim fünffachen Wert des größten Hartstoffpartikeldurchmessers endet.

Die US 2002/0014047 A1 offenbart Fußbodenpaneele, auf deren Oberseite eine Dekorschicht aufgebracht ist, die von einer transparenten Schicht abgedeckt wird. Die Dekorschicht kann aus Papier oder einem anderen Material bestehen. Die transparente Deckschicht kann aus einer dünnen, transparenten Papierschicht bestehen.

Die DE 296 02 329 U1 offenbart ein als Bodenbelag verwendbares Flächenelement, bei dem auf eine Holzwerkstoffplatte ein Holzfurnier aufgebracht ist, das von einer Lackierung, die hochfeste abriebshemmende Partikel enthält, abgedeckt wird. Die Partikel können Korund- oder Diamantpartikel sein. Die Lackierung kann aus mehreren Schichten aufgebaut sein.

Die DE 199 52 021 C1 beschreibt eine Vorrichtung zur Beschichtung von profiliertem Langmaterial, zum Beispiel Leisten. Diese Leisten können in einer Lackiervorrichtung lackiert werden.

Von dieser Problemstellung ausgehend soll die eingangs beschriebene Möbelplatte verbessert werden, sodass beim Verpressen des Laminats die Pressbleche geschont werden, und dass die Optik und Haptik der Platte möglichst getreu einer Echtholzplatte angenähert wird.

Die Problemlösung erfolgt bei einer gattungsgemäßen Möbelplatte dadurch, dass das Dekor zumindest direkt auf die Oberseite aufgedruckt ist und mit mindestens einer Schicht aus einem transparenten Kunstharz abgedeckt ist, in die ein zu dem Dekor korrespondierendes Relief gepresst ist.

Vorzugsweise stimmt das Relief exakt mit dem Dekor überein. Das Dekor kann insbesondere vorzugsweise auch von zwei verpressten Kunstharzschichten abgedeckt sein.

Das Dekor kann auch zusätzlich auf die Unterseite der Trägerplatte aufgedruckt und mit mindestens einer Schicht aus einem transparenten Kunstharz abgedeckt sein. Gegebenenfalls kann auch die Unterseite der Trägerplatte mit einem zu dem Dekor korrespondierenden Relief versehen sein, das in die Kunstharzschicht gepresst wird.

Beim Verpressen der Kunstharzschicht verändert das Dekor sich weder in der Länge noch in der Breite. Die Säge, mit der später Möbelplatten zugeschnitten werden, kann voreingestellt sein. In die Kunstharzschicht der erfindungsgemäß ausgebildeten Platte können selbst filigranste Reliefe geprägt werden, die exakt mit dem Dekor übereinstimmen. Die Herstellkosten qualitativ hochwertiger Platten werden deutlich reduziert. Ein weiterer Einspareffekt kann dadurch entstehen, dass die Papierschicht entfällt.

Ein Verfahren zur Herstellung der erfindungsgemäßen Möbelplatte zeichnet sich durch folgende Schritte aus:
a) auf eine oder zwei Seiten einer Trägerplatte bestehend aus MDF oder einer Spanplatte mit einer feingestreuten Deckschicht wird direkt ein Dekor, vorzugsweise ein Holzdekor aufgedruckt,
b) mit einer Rasterwalze werden auf der mit dem Dekor (Oberseite) und der dieser gegenüberliegenden (Unterseite) Seite ein oder mehrere Kunstharzschichten aufgestrichen,
c) die Kunstharzschichten werden in einer KT-Presse in bekannter Weise mit der Platte verpresst,
d) in die Kunstharzschicht wird ein mit dem Dekor übereinstimmendes Relief geprägt;
e) aus der Trägerplatte werden kleinere Möbelplatten ausgesägt.

Da keine Papierschichten verwendet werden, sind die so hergestellten Platten vor Verzug, der durch die Eigenzugkraft der Papiere entstehen könnte, sicher. In Folge der dünnen Schichten können kurze Presszeiten realisiert werden.

## Patentansprüche

1. Möbelplatte, die aus einer größeren Trägerplatte, bestehend aus MDF oder einer Spanplatte mit einer fein gestreuten Deckschicht, ausgesägt wurde, mit einem zumindest direkt auf die Oberseite aufgedruckten Dekor, vorzugsweise einem Holzdekor, das mit mindestens einer Schicht aus einem transparenten Kunstharz abgedeckt ist, in die ein zu dem Dekor korrespondierendes Relief gepresst ist.

2. Möbelplatte nach Anspruch 1, **dadurch gekennzeichnet, dass** das Relief exakt mit dem Dekor übereinstimmt.

3. Möbelplatte nach Anspruch 1 oder 2, **dadurch gekennzeichnet, dass** auch direkt auf die Unterseite ein Dekor aufgedruckt ist, das mit mindestens einer Schicht aus einem transparenten Kunstharz abgedeckt ist, in die ein zu dem Dekor korrespondierendes Relief gepresst ist.

4. Möbelplatte nach einem der vorstehenden Ansprüche, **dadurch gekennzeichnet, dass** keine Papierschichten enthalten sind.

5. Möbelplatte nach einem der vorstehenden Ansprüche, **dadurch gekennzeichnet, dass** das Dekor von zwei verpressten Kunstharzschichten abgedeckt ist.

6. Verfahren zur Herstellung einer Möbelplatte, **gekennzeichnet durch** folgende Schritte:
a) auf eine oder zwei Seiten einer Trägerplatte bestehend aus MDF oder einer Spanplatte mit einer feingestreuten Deckschicht wird direkt ein Dekor, vorzugsweise ein Holzdekor, aufgedruckt,
b) mit einer Rasterwalze werden auf der mit dem Dekor (Oberseite) und der dieser gegenüberliegenden (Unterseite) Seite ein oder mehrere Kunstharzschichten aufgestrichen,
c) die Kunstharzschichten werden in einer KT-Presse in bekannter Weise mit der Platte verpresst,
d) in die Kunstharzschicht wird ein mit dem Dekor übereinstimmendes Relief geprägt;
e) aus der Trägerplatte werden kleinere Möbelplatten ausgesägt.
